# EUROPEAN PATENT SPECIFICATION

(11) **EP 0 583 842 B1**
(45) Date of publication and mention of the grant of the patent: **03.05.2000**
(21) Application number: 93202414.4
(22) Date of filing: 17.08.1993
(51) Int. Cl.: C03B 11/06, C03B 11/10, C03B 11/12, C03B 9/193

(54) **Method of manufacturing a hollow cone and device suitable for carrying out the method, cone manufactured by the method, and cathode ray tube provided with such a cone**
Verfahren zum Herstellen eines hohlen Konus sowie Einrichtung zum Durchführen des Verfahrens, nach diesem Verfahren hergestellter Konus und Elektronenstrahlröhre mit einem derartigen Konus
Procédé de fabrication d'un cône creux et dispositif convenant pour la mise en oeuvre du procédé ainsi que cône réalisé par la mise en oeuvre du procédé et tube à rayons cathodiques muni d'un tel cône

(30) Priority: 20.08.1992 EP 92202545
(43) Date of publication of application: 23.02.1994
(73) Proprietor: Koninklijke Philips Electronics N.V., 5621 BA Eindhoven (NL)
(72) Inventor: Selten, Wilhelmus Nicolaas Maria, NL-5656 AA Eindhoven (NL); van Roosmalen, Martinus Paulus Wilhelmus, NL-5656 AA Eindhoven (NL); Tuin, Hermanus Nicolaas, NL-5656 AA Eindhoven (NL)
(74) Representative: Cuppens, Hubertus Martinus Maria

(56) References cited:
- DE-A- 1 900 812
- FR-A- 1 198 907
- FR-A- 2 077 196
- FR-A- 2 288 066
- US-A- 3 258 321
- US-A- 4 052 189

## Description

The invention relates to a method of manufacturing a hollow cone provided with an open side and a cone tip remote from the open side, whereby a gob of viscous material is brought into a first mould part after which the gob of material is moulded into the desired shape of the hollow cone by means of a second mould part cooperating with the first mould part.

The invention also relates to a device for manufacturing a hollow cone provided with an open side and a cone tip remote from the open side from a gob of viscous material, suitable for carrying out the method according to the invention, which device is provided with a first and a second mould part which are displaceable relative to one another.

The invention further relates to a cone manufactured by the method according to the invention and to a cathode ray tube provided with such a cone.

The term "viscous material" is understood to mean a material such as glass or synthetic resin with a viscosity of 10²-10⁷ Pa.s.

A method and a device suitable for manufacturing a cone are known from German Patent DE-C2-2734773.

During the manufacture of a cone, the gob of material is introduced into the first mould part and then pressed into the desired shape by means of the second mould part. The first mould part has a funnel shape and the gob is introduced into a comparatively narrow portion of the funnel shape. The cone tip is formed in the narrowest portion of the funnel shape during moulding. The required wall thickness in the vicinity of the cone tip of the cone to be shaped is comparatively small compared with the rest of the cone. During moulding, the material is pressed into the narrowest portion of the first mould part, from which a portion of the material is pressed towards the wider portion of the first mould part through interspacings between the first and second mould parts. During moulding, the distance between the first and second mould parts becomes increasingly smaller, so that the material is forced to flow through ever narrower interspacings towards the wider portion of the funnel shape. Furthermore, a thin skin of cooled material is formed against the mould parts during moulding. This renders the interspacings through which material can flow even narrower. Comparatively high compression forces are necessary for forcing the material through these narrow interspacings. It is possible for the cone tip to break off from the rest of the cone with these high compression forces. This breaking of the cone tip is the result of the excessive pressure on the material which has already cooled down.

A solution proposed for this problem in the known device is a better temperature control in that the wall thickness of the mould parts in the vicinity of the cone tip to be formed is at least twice as thin as the wall thickness of the remaining portions of the mould parts.

A disadvantage of the known device is that the determination of the required wall thicknesses is inconvenient because new mould parts are to be manufactured each time for changing the wall thicknesses.

The invention has for its object to provide a simple method for the manufacture of a hollow cone of the kind indicated in the beginning by which the said disadvantages are avoided.

According to the invention, the method is for this purpose characterized in that an escape space for the material becomes accessible in the vicinity of the cone tip to be formed and adjoining the first mould part at the moment that the pressure present in the material in the vicinity of the cone tip to be formed exceeds a previously defined value.

The material which during moulding cannot or can hardly flow through the interspacings between the mould parts towards the wider portion of the funnel shape anymore will try to escape to the escape space. The entrance to the escape space, however, is blocked until the pressure in the material in the vicinity of the cone tip exceeds a previously defined value and the escape space becomes accessible. The pressure in the material in the vicinity of the cone tip in this way never becomes higher than a predetermined value.

A blocking mechanism which is comparatively easy to provide and in which the previously defined value of the admissible pressure in the material in the vicinity of the cone tip can be easily changed is in an embodiment of the method according to the invention, characterized in that the escape of the material into the escape space is prevented by means of a gas pressure applied in the escape space until the pressure present in the material has become greater than the gas pressure.

The desired gas pressure level is experimentally determined, while the gas pressure may be readily changed so as to optimize the moulding process.

An alternative embodiment of the method according to the invention is characterized in that, after the gob of material has been introduced into the first mould part, the gob is kept floating in the first mould part by means of the gas pressure until moulding starts.

The time between the moment the viscous gob of material is introduced into the first mould part and the start of the moulding process in practice is a few seconds. A cold layer arises in the gob in all locations where the gob touches the walls of the mould part, because the gob transfers heat to the colder mould part. The formation of the cold layer, especially in locations where the cone to be formed has a comparatively thin wall, means that the required compression force is comparatively great. Sagging of the gob by its own weight is prevented in that the gob is kept floating in the mould part until moulding starts, so that the contact surface area between the gob and the mould part remains comparatively small and only a comparatively small cold layer is formed before moulding starts. Owing to this measure, the required compression force is comparatively small, which contributes to the prevention of cone tip fracture.

A further embodiment of the method according to the invention is characterized in that the formed cone is pressed from the first mould part by means of the gas pressure after moulding.

The removal of the moulded cone from the first mould part is facilitated thereby. It is noted that the use of compressed air for stripping the formed cone from the mould part is known *per se* from German Patent Application DE-A- 2001977. In the method according to the invention, however, the gas pressure is used both for preventing cone tip fracture and for removing the formed cone from the mould part.

A yet further embodiment of the method according to the invention is characterized in that the gas pressure is adjustable during the manufacture of the hollow cone.

This renders it possible to adapt the gas pressure to the desired pressure at any moment during cone manufacture. The relevant pressure gradient is experimentally determined.

The invention also has for its object to provide a device for the manufacture of a hollow cone of the kind indicated in the beginning, by which the disadvantages of the known device are avoided.

The device according to the invention for manufacturing a hollow cone provided with an open side and a cone tip remote from the open side suitable for carrying out the method according to the invention is for this purpose characterized in that it is provided with an escape space in the vicinity of the cone tip to be formed and adjoining the first mould part, means being provided for making the escape space accessible for the material as the pressure present in the material in the vicinity of the cone tip to be formed exceeds a previously defined value during the pressing operation.

An embodiment of a device suitable for carrying out the method according to the invention, in which the escape space is initially kept inaccessible by means of gas pressure until the pressure in the material has become greater than the gas pressure, is characterized in that the escape space is provided with a connection to a source of pressurized gas.

The desired gas pressure is applied in the escape space through the gas pressure connection. The use of gas for rendering the escape space temporarily inaccessible has the advantage that no moving mechanical parts need be used in and around the hot escape space (400° C). Moving parts may cause malfunctioning and are subject to wear.

A further embodiment of a device suitable for carrying out the method according to the invention is characterized in that the escape space is funnel-shaped, a comparatively large open side of the escape space merging into the first mould part and a comparatively small open side of the escape space being connected to the gas connection.

Owing to the funnel-shaped escape space, the cone can be readily pressed from the escape space and the mould part after moulding.

The invention is explained in more detail with reference to the drawing, in which
Fig. 1 diagrammatically shows an embodiment of a device according to the invention, Fig. 1a showing a cross-section and Fig. 1b a plan view of a detail of the device shown in Fig. 1a,
Fig. 2 diagrammatically shows a cross-section of an alternative embodiment of a device according to the invention,
Figs. 3a and 3b show the manufacture of a cone according to the prior art,
Figs. 4a and 4b show the manufacture of a cone by a method according to the invention,
Fig. 5 shows the pressure gradient of the gas pressure applied in the escape space during manufacture of a cone, and
Fig. 6 shows a cone manufactured by the method according to the invention.

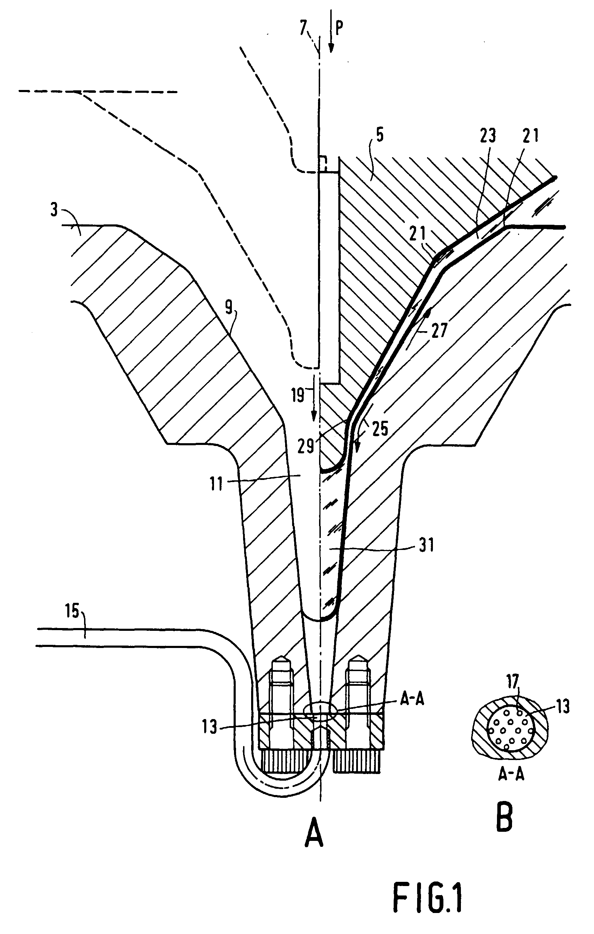

Fig. 1 shows a device 1 which forms part of a moulding press which is known *per se*. The device is provided with a first mould part 3 and a second mould part 5 which is displaceable relative to the first mould part 3 along an axis 7. The first mould part 3 comprises a funnel-shaped portion 9 and an escape space 11. The escape space 11 is connected to a gas connection 15 through a gas-transmitting filter 13. The gas-transmitting filter 13 is provided with comparatively small channels 17 which run parallel to the axis 7.
A gob of heated glass with a viscosity of 10³-10⁴ Pa.s is introduced into the first mould part 3, upon which the second mould part 5 is displaced in the direction of the arrow 19 and the glass gob is moulded into the desired shape between the two mould parts. Different positions of the second mould pan 5 are indicated with broken lines. Gas is introduced into the escape space 11 through the gas connection 15 and a gas pressure is adjusted such that the glass cannot flow into the escape space. The gas may be air, nitrogen, or some other gaseous medium.
In those locations where the glass lies against the mould parts the glass will cool down comparatively strongly and a thin layer of glass 21 of comparatively high viscosity will be formed. The glass which has not yet cooled down so strongly is pressed down and up through an interspacing 23 present between the layers 21 in the direction of the arrows 25, 27, respectively. The compression force P required for this increases in proportion as the interspacing 23 becomes narrower. At a certain moment the pressure in the glass in the vicinity 29 of the cone tip to be formed will become greater than the gas pressure prevailing in the escape space 11. From that moment the glass will flow into the escape space 11. After moulding, the second mould part 5 is displaced in a direction opposite to the arrow 19. The moulded cone is subsequently pressed from the first mould part 3 by the gas pressure. The escape space 11 is funnel-shaped to facilitate stripping of the moulded cone from the first mould part 3.
The gas-transmitting filter 13 is provided with channels 17 whose cross-sectional dimensions (0,05-0,3 mm) are so chosen that the glass cannot penetrate these channels owing to its viscosity when it is pressed against the gas-transmitting filter 13. In practice, the aim will be to prevent this by means of a good pressure control.

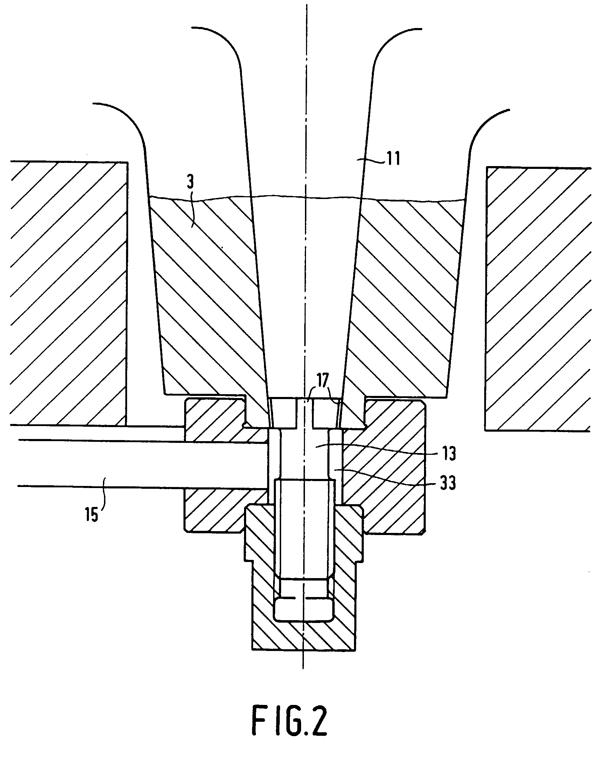

Fig. 2 shows an alternative embodiment of an escape space 11 provided in the first mould part 3. The solid gas-transmitting filter 13 situated in the escape space 11 is provided with four channels 17 at its circumference which are connected to the gas connection 15 *via* a chamber 33.

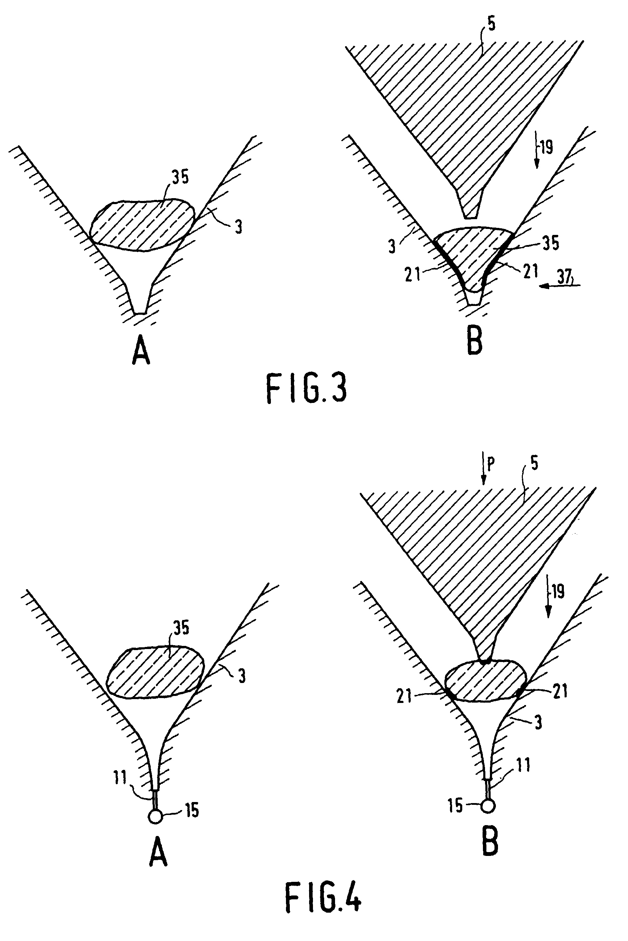

Figs. 3a and 3b diagrammatically show an aspect of glass moulding according to the prior art. Fig. 3a shows a mould part 3 into which a glass gob 35 has been introduced. It then takes a few seconds in practice before moulding is started. During this time the glass gob 35 sinks into the bottom position of the mould part 3 under its own weight. This is shown in Fig. 3b. A comparatively cold layer 21, which increases in thickness during moulding, arises in all locations where the glass touches the mould part 3. The compression force required becomes comparatively high at the end of the moulding process owing to the presence of the cold layer 21 in that portion of the first mould part 3 where the cone to be formed has comparatively thin walls.

Figs. 4a and 4b diagrammatically show glass moulding by the method according to the invention. Fig. 4a shows a mould part 3 into which a glass gob 35 has been introduced. A gas is brought into the escape space 11 below the glass gob 35 through the gas connection 15 at such a pressure that the glass gob 35 remains as it were in a floating state. The formation of a cold layer 21 is then limited to a few spots where the gob lies against the mould part, so that no cold layer has yet been able to form near the cone tip to be moulded at the beginning of the moulding process. As a result the interspacing between the mould parts 3, 5 through which glass can continue to flow is greater than in the case of moulding according to the prior art, and the required compression force P at the end of the moulding process is accordingly lower.

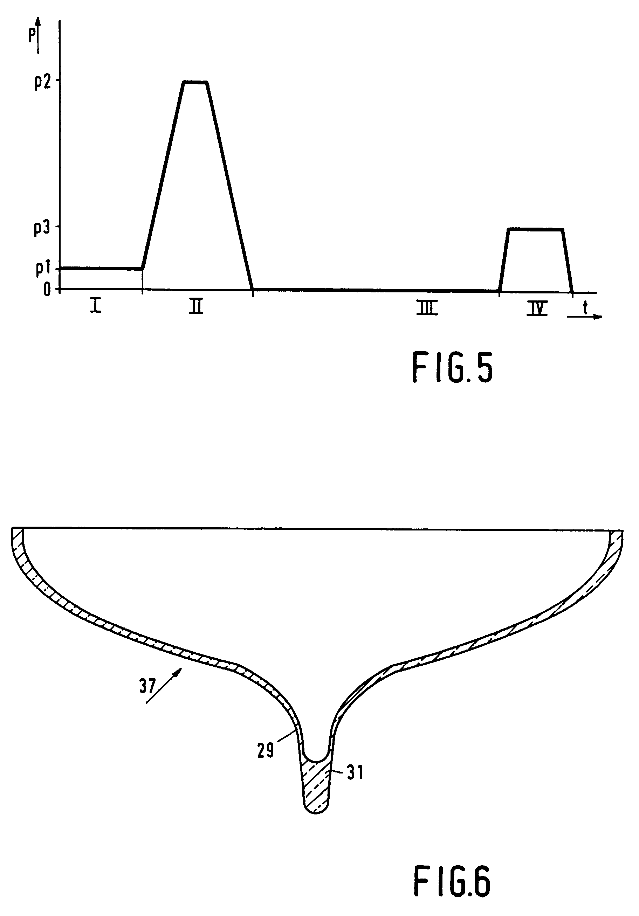

Fig. 5 shows the pressure gradient of the gas pressure provided in the escape space 11 during the manufacture of a cone. Time is plotted on the horizontal axis and pressure on the vertical axis. Cone manufacture is subdivided into four phases. At the beginning of phase I, the gob of material is brought into the first mould part and the gob is kept floating during phase I by means of the gas pressure p1. In phase II, the gob is moulded into the desired shape with a constant compression force, during which the pressure in the escape space is increased to p2. The pressure p2 provided is between 3 and 100 bar, depending on the size of the cone to be moulded and the wall thickness of the cone in the vicinity of the cone tip to be formed. After moulding, pressure is reduced to zero bar by gauge, after which during phase III the formed cone is cooled down. In phase IV, the cone is pressed from the first mould part by means of the gas pressure p3.

Fig. 6 shows a cone 37 manufactured by the method according to the invention. The cone tip 31 is comparatively long, *i.e.* compared with cones manufactured by the known methods. The cone wall thickness in the vicinity of the portion 29 of the cone tip 31 is approximately 1 to 10 mm.

The cone may be used, for example, in a cathode ray tube, the tip 31 formed at the cone being removed and a neck-shaped element being fastened in the opening formed thereby. An electron gun is subsequently fastened in this neck-shaped element. When a cone manufactured by the method according to the invention is used, fewer rejects occur in the manufacture of a cathode ray tube than with the use of a known cone. This is probably caused by the fact that the material in the narrow portion of the cone contains fewer mechanical stresses than the known cone, so that fastening of the electron gun to the cone leads less quickly to material fracture in the cone.

The method of manufacturing a hollow cone may also be used for other products such as funnels, and products having a hollow, conical projection.

The escape space may be blocked, not only by means of gas pressure, but also, for example, by means of a spring-loaded mechanical valve which opens automatically when the pressure exerted thereon exceeds a previously defined value.

## Claims

1. A method of manufacturing a hollow cone (37) provided with an open side and a cone tip (31) remote from the open side, whereby a gob of viscous material (35) is brought into a first mould part (3) after which the gob of material (35) is moulded into the desired shape of the hollow cone (37) by means of a second mould part (5) cooperating with the first mould part (3), characterized in that an escape space (11) for the material (35) becomes accessible in the vicinity of the cone tip (31) to be formed and adjoining the first mould part (3) at the moment that the pressure present in the material (35) in the vicinity of the cone tip (31) to be formed exceeds a previously defined value.

2. A method as claimed in Claim 1, characterized in that the escape of the material (35) into the escape space (11) is prevented by means of a gas pressure applied in the escape space (11) until the pressure present in the material (35) has become greater than the gas pressure.

3. A method as claimed in Claim 2, characterized in that after the gob of material (35) has been introduced into the first mould part (3), the gob is kept floating in the first mould part by means of the gas pressure until moulding starts.

4. A method as claimed in Claim 2 or 3, characterized in that the formed cone (37) is pressed from the first mould part (3) by means of the gas pressure after moulding.

5. A method as claimed in Claim 2, 3 or 4, characterized in that the gas pressure is adjustable during the manufacture of the hollow cone (37).

6. A device for manufacturing a hollow cone (37) provided with an open side and a cone tip (31) remote from the open side from a gob of viscous material, suitable for carrying out the method as claimed in Claim 1, 2, 3, 4 or 5, which device is provided with a first and a second mould part (3,5) which are displaceable relative to one another, characterized in that the device is provided with an escape space (11) in the vicinity of the cone tip (31) to be formed and adjoining the first mould part (3), means being provided for making the escape space (11) accessible for the material (35) as the pressure present in the material (35) in the vicinity of the cone tip (31) to be formed exceeds a previously defined value during the pressing operation.

7. A device for manufacturing a hollow cone (37) provided with an open side and a cone tip (31) remote from the open side as claimed in Claim 6, characterized in that the escape space (11) is provided with a connection (15) to a source of pressurized gas.

8. A device for manufacturing a hollow cone (37) provided with an open side and a cone tip (31) remote from the open side as claimed in Claim 7, characterized in that the escape space (11) is funnel-shaped, a comparatively large open side of the escape space merging into the first mould part (3) and a comparatively small open side of the escape space (11) being connected to the gas connection (15).

9. A cone manufactured by the method as claimed in Claim 1, 2, 3, 4 or 5.

10. A cathode ray tube provided with a cone as claimed in Claim 9.

## Patentansprüche

1. Verfahren zum Herstellen eines hohlen Konus (37), der mit einer offenen Seite und einer in einem Abstand von der offenen Seite liegenden Konusspitze (31) versehen ist, wobei eine Portion viskoses Material (35) in einen ersten Formteil (3) gegeben wird, wonach mit Hilfe eines mit dem ersten Formteil (3) zusammenarbeitenden zweiten Formteils (5) die Portion des Materials (35) in der gewünschten Form des hohlen Konus (37) gepresst wird, dadurch gekennzeichnet, dass zu dem Zeitpunkt, wo der in dem Material (35) aufgebaute Druck in der Nähe der zu formenden Konusspitze (31) einen vorbestimmten Wert überschreitet, in der Nähe der zu formenden Konusspitze (31) und anschließend an den ersten Formteil (3) ein Ausweichraum (11) für das Material (35) zugänglich wird.

2. Verfahren nach Anspruch 1, dadurch gekennzeichnet, dass mit Hilfe eines in dem Ausweichraum (11) vorgesehenen Gasdrucks das Ausweichen des Materials (35) in den Ausweichraum (11) vermieden wird, bis der in dem Material (35) aufgebaute Druck diesen Gasdruck übersteigt.

3. Verfahren nach Anspruch 2, dadurch gekennzeichnet, dass nachdem die Portion des Materials (35) in den ersten Formteil (3) eingegeben wurde, diese Portion mit Hilfe des Gasdrucks in dem ersten Formteil in Schwebelage gehalten wird, bis der Formpressvorgang anfängt.

4. Verfahren nach Anspruch 2 oder 3, dadurch gekennzeichnet, dass nach dem Formpressen der geformte Konus (37) mit Hilfe des Gasdrucks aus dem ersten Formteil (3) herausgedrückt wird.

5. Verfahren nach Anspruch 2, 3 oder 4, dadurch gekennzeichnet, dass der Gasdruck beim Herstellen des hohlen Konus (37) einstellbar ist.

6. Vorrichtung zum Herstellen eines hohlen Konus (37) mit einer offenen Seite und einer von der offenen Seite entfernt liegenden Konusspitze (31) aus einer Portion viskosen Materials, geeignet zum Durchführen des Verfahrens nach Anspruch 1, 2, 3, 4 oder 5, wobei die Vorrichtung mit einem ersten und einem zweiten Formteil (3, 5) versehen ist, die gegenüber einander verlagerbar sind, dadurch gekennzeichnet, dass sie in der Nähe der zu formenden kegelförmigen Spitze (31) mit einem sich an den ersten Formteil (3) anschließenden Ausweichraum (11) versehen ist, wobei Mittel vorgesehen sind, damit der Ausweichraum (11) für das Material (35) zugänglich ist, wenn der Druck in dem Material (35) in der Nähe der zu formenden kegelförmigen Spitze (31) beim Formpressvorgang einen vorbestimmten Wert übersteigt.

7. Vorrichtung zum Herstellen eines hohlen Konus (37) mit einer offenen Seite und einer in einem Abstand von der offenen Seite liegenden kegelförmigen Spitze nach Anspruch 6, dadurch gekennzeichnet, dass der Ausweichraum (11) mit einer Verbindung (15) zu einer Druckluftquelle versehen ist.

8. Vorrichtung zum Herstellen eines hohlen Konus (37) mit einer offenen Seite und einer in einem Abstand von der offenen Seite liegenden Konusspitze (31), dadurch gekennzeichnet, dass der Ausweichraum (11) trichterförmig ist, eine relativ große offene Seite des Ausweichraums in den ersten Formteil (3) übergeht und wobei eine relativ kleine offene Seite des Ausweichraums (11) mit dem Gasanschluss (15) verbunden ist.

9. Konus, hergestellt nach dem Verfahren nach Anspruch 1, 2, 3, 4 oder 5.

10. Elektronenstrahlröhre mit einem Konus nach Anspruch 9.

## Revendications

1. Procédé pour fabriquer un cône creux (37) pourvu d'un côté ouvert et d'une extrémité de cône (31) située à l'opposé du côté ouvert, une portion de matériau visqueux (35) étant introduite dans un premier demi-moule (3) après quoi la portion de matériau (35) est moulée dans la forme souhaitée du cône creux (37) au moyen d'un deuxième demimoule (5) coopérant avec le premier demi-moule (3), caractérisé en ce qu'un espace d'échappement (11) pour le matériau (35) devient accessible à proximité de l'extrémité de cône (31) à former et étant contigu au premier demi-moule (3) au moment où la pression présente dans le matériau (35) à proximité de l'extrémité de cône (31) à former dépasse une valeur précédemment définie.

2. Procédé selon la revendication 1, caractérisé en ce que l'échappement du matériau (35) dans l'espace d'échappement (11) est évité au moyen d'une pression de gaz appliquée dans l'espace d'échappement (11) jusqu'à ce que la pression présente dans le matériau (35) est devenue supérieure à la pression de gaz.

3. Procédé selon la revendication 2, caractérisé en ce qu'après la portion de matériau (35) a été introduite dans le premier demi-moule (3), la portion est maintenue flottante dans le premier demi-moule au moyen de la pression de gaz jusqu'à ce que le moulage commence.

4. Procédé selon la revendication 2 ou 3, caractérisé en ce que le cône formé (37) est enlevé par pressage du premier demi-moule (3) au moyen de la pression de gaz après moulage.

5. Procédé selon la revendication 2, 3 ou 4, caractérisé en ce que la pression de gaz est réglable pendant la fabrication du cône creux (37).

6. Dispositif pour fabriquer à partir d'une portion de matériau visqueux un cône creux (37) pourvu d'un côté ouvert et d'une extrémité de cône (31) située à l'opposé du côté ouvert convenable pour mettre en oeuvre le procédé selon la revendication 1, 2, 3, 4 ou 5, ledit dispositif étant pourvu d'un premier et d'un deuxième demi-moule (3, 5) qui sont mobiles l'un par rapport à l'autre, caractérisé en ce que le dispositif est pourvu d'un espace d'échappement (11) à proximité de l'extrémité de cône (31) à former et étant contigu au premier demi-moule (3), des moyens étant prévus pour rendre accessible l'espace d'échappement (11) pour le matériau (35) à mesure que la pression présente dans le matériau (35) à proximité de l'extrémité de cône (31) à former dépasse une valeur précédemment définie pendant l'opération de pressage.

7. Dispositif pour fabriquer un cône creux (37) pourvu d'un côté ouvert et d'une extrémité de cône (31) située à l'opposé du côté ouvert selon la revendication 6, caractérisé en ce que l'espace d'échappement (11) est pourvu d'une connexion (15) à une source de gaz pressurisé.

8. Dispositif pour fabriquer un cône creux (37) pourvu d'un côté ouvert et d'une extrémité de cône (31) située à l'opposé du côté ouvert selon la revendication 7, caractérisé en ce que l'espace d'échappement (11) est en forme d'entonnoir, un côté ouvert relativement large de l'espace d'échappement s'étendant dans le premier demi-moule (3) et un côté ouvert relativement petit de l'espace d'échappement (11) étant relié à la connexion de gaz (15).

9. Cône fabriqué suivant le procédé selon la revendication 1, 2, 3, 4 ou 5.

10. Tube à rayons cathodiques pourvu d'un cône selon la revendication 9.
